# EUROPÄISCHE PATENTSCHRIFT

(11) **EP 0 843 876 B1**
(45) Veröffentlichungstag und Bekanntmachung des Hinweises auf die Patenterteilung: **04.02.2004**
(21) Anmeldenummer: 97929094.7
(22) Anmeldetag: 11.06.1997
(51) Int. Cl.: G12B 11/00, G01D 13/22

(54) **AUFBAU EINES ELEKTRISCHEN KOMBIINSTRUMENTS**
STRUCTURE OF AN ELECTRIC MULTI-PURPOSE INSTRUMENT
STRUCTURE D'UN INSTRUMENT ELECTRIQUE COMBINE

(30) Priorität: 12.06.1996 DE 19623406
(43) Veröffentlichungstag der Anmeldung: 27.05.1998
(73) Patentinhaber: ROBERT BOSCH GMBH, 70442 Stuttgart (DE)
(72) Erfinder: WIESA, Thomas, D-71665 Vaihingen (DE); HAUSSMANN, Martin, D-70794 Filderstadt (DE); SCHACH, Harald, D-71229 Leonberg (DE); ISSLER, Gerhard, D-71272 Renningen (DE); SYBRICHS, Ralf, D-71254 Ditzingen (DE); HASPEL, Ulrich, D-74376 Gemmrigheim (DE); UNGERICHT, Günther, D-72202 Nagold (DE); ERNST, Waldemar, D-71665 Vaihingen (DE)
(86) Internationale Anmeldenummer: PCT/DE1997/001180
(87) Internationale Veröffentlichungsnummer: WO 1997/048103

(56) Entgegenhaltungen:
- DE-A- 4 407 233
- DE-A- 4 433 150
- US-A- 3 909 670

## Beschreibung

### Stand der Technik

Die Erfindung geht aus von einem Aufbau eines elektrischen Kombiinstruments nach der Gattung des Hauptanspruchs. Bei elektrischen Kombiinstrumenten (KI) wird die Plazierung der Zeiger und Skalen (z. B. des Tachometers, des Tanks, der Temperatur oder des Drehzahlmessers) der Warn- und Symbolfelder (ABS, Airbag, Blinker, Gurt, Handbremse, Nebelscheinwerfer usw.) und der Flüssigkristallanzeigen über das äußere Erscheinungsbild, also das Design, festgelegt. Durch diese vom Design vorgegebene Plazierung der Zeiger und Anzeigen wird der damit zusammenhängende Zeigerantrieb und die Beleuchtung, d. h. das Sichtbarmachen der Anzeigen, ebenso lagemäßig festgelegt. Dies führt bei der Entwicklung des Kombiinstruments dazu, daß auf dem Schaltungsträger (Leiterplatte), auf dem auch Beleuchtung und Zeigerantrieb bestückt ist, viele leere Zonen, die nicht bestückt sind und daher nicht genutzt werden können, entstehen, und die Größe der Leiterplatte durch die Plazierung der Zeiger und Anzeigen bestimmt wird, und gegebenenfalls überdimensioniert ist. In der Fertigung der Kombiinstrumente ist durch die Plazierung des Zeigerantriebs auf der Leiterplatte, das Zeigeraufpressen und das Verschließen des für den Autofahrer sichtbaren Bereichs des Kombiinstruments ein Prozeß- bzw.

Montageschritt der relativ am Schluß der Fertigung erfolgen muß.
Damit ist der für den Autofahrer sichtbare Bereich relativ lange einer möglichen Verunreinigung in der Fertigung ausgesetzt.

Aus der DE 44 07 233 A1 ist ein Kombinationsinstrument bekannt, bei dem eine Leiterplatte an einem Messwerk angeordnet ist, wobei die Leiterplatte Lichtquellen zur Einkopplung in einen Zeiger aufweist, der durch das Messwerk angetrieben wird. Ferner ist eine zweite Leiterplatte vorgesehen, die mit Abstand zu dem Lichtleiter verläuft und die weitere Lichtquellen zur Lichteinkopplung in den Lichtleiter aufweist.

### Vorteile der Erfindung

Der erfindungsgemäße Aufbau des Kombiinstruments mit den kennzeichnenden Merkmalen des Hauptanspruchs hat demgegenüber den Vorteil, daß die Funktionen der Leiterplatte, als Träger von Bauelementen, sowie aller Schaltungen, von den "opto-mechanischen" Funktionen, nämlich den mechanischen und elektrischen Verbindungen für Beleuchtungen, der Anzeigen und der LCD, sowie Zeigerantrieb und Zeigerlagerung, getrennt werden.

Durch die in den Unteransprüchen aufgeführten Maßnahmen ist eine vorteilhafte Weiterbildung und Verbesserung des im Hauptanspruch gegebenen Aufbaus möglich.

Besonders vorteilhaft ist, daß durch die Trennung des designgebundenen Teil des Kombiinstruments von der Leiterplatte, die Leiterplatte nicht mehr an die Position von Zeigerantrieben usw. gebunden ist und deswegen mit optimalen Abmessungen gebaut werden kann. Dadurch werden die Kosten für den Materialeinsatz minimiert.

Besonders vorteilhaft ist, daß eine Standardisierung der elektrischen Schaltung eingeführt werden kann, so daß die Kosten für die Produktion durch Reduzierung der Schaltungsvarianten und einer erhöhten Stückzahl verkleinert werden. Durch die Trennung von opto-mechanischen und elektronischen Bereichen führen Schaltungsänderungen nicht mehr zu Änderungen in der Mechanik. Die Entkopplung von Mechanik und Elektronik kann zur Standardisierung der Leuchtscheiben für Tubenanzeigen oder Warn- und Symbolfelder benutzt werden. Weiterhin ist es möglich, Standardpaarungen, z. B. Leuchtscheibe und LED bzw. Abstand, Lage und Intensität, sowie Anzahl der LEDs festzulegen.

Durch das erfindungsgemäße Verfahren zur Montage der gesamten Baugruppe des Kombiinstruments ist es von Vorteil, daß die Funktionsgruppe Opto-Mechanik bereits als geschlossene Einheit eingebaut werden kann und nicht mehr dem Schmutz in der Fertigung ausgesetzt ist. Desweiteren ist es möglich, durch die Trennung von Mechanik und Elektronik, das Elektronikmodul in einem Zentralelekroniksteuergerät mit weiteren Funktionen zu integrieren.

### Zeichnung

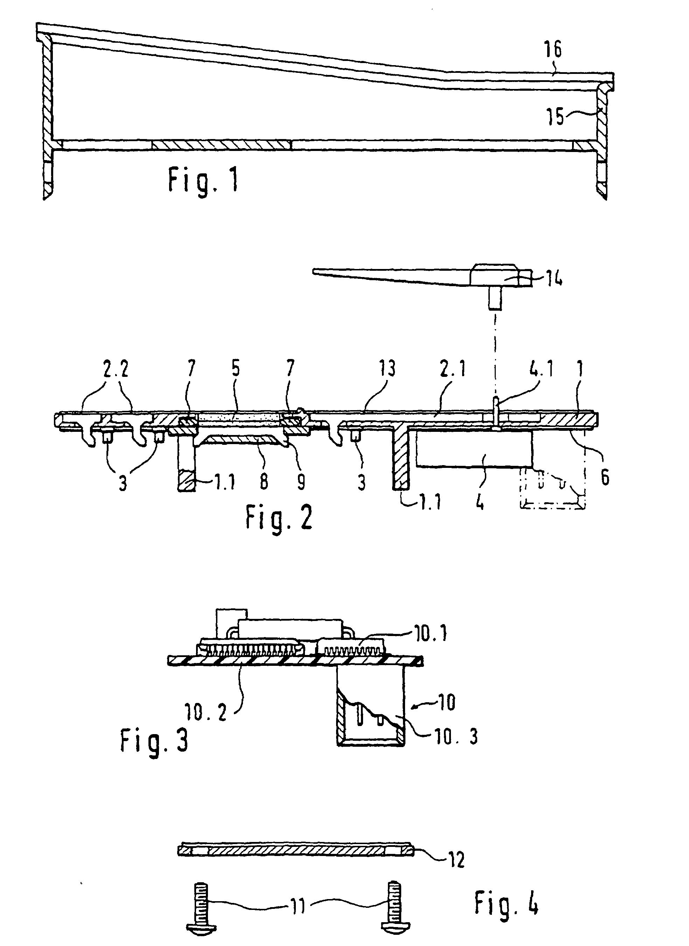

Ein Ausführungsbeispiel der Erfindung ist in Figur 1 bis Figur 4 dargestellt und in der nachfolgenden Beschreibung näher erläutert. Es zeigt Figur 1 die Frontabdeckung des Kombiinstruments, Figur 2 der Aufbau der einzelnen Instrumente auf einer Trägerplatte, Figur 3 das Elektronikmodul und Figur 4 die Befestigung der Module gegeneinander.

### Beschreibung des Ausführungsbeispiels

Um die erwünschte Trennung von mechanischen Bauteilen sowie der Beleuchtungsmittel von der eigentlichen elektronischen Ansteuerung zu erreichen, müssen die Bauteile auf einer getrennten Platte vormontiert werden. Auf einer Trägerplatte (1) befinden sich Aussparungen für die Aufnahme von Leuchtscheiben für Tubenanzeigen (2.1) wie z. B. Tachometer, Drehzahlmesser, Tankanzeige, Temperaturanzeige und für Warnund Symbolfelder (2.2) wie z. B. Anzeigen für ABS, Airbag, Blinker, Gurt usw. Diese sind mit der Trägerplatte (1) über Befestigungsmethoden wie z. 3. Kleben, Klipsen, Einpressen o. a. fest verbunden. Auf der Rückseite der Trägerplatte (1) befinden sich Beleuchtungskörper (3), z. B. LEDs, sowie der Zeigerantrieb für Analogzeigerinstrumente mit Schrittmotoren. Auch die Zeigerantriebe (4) werden mit der Trägerplatte 1 durch Einpressen , Verklipsen oder durch Schrauben fest verbunden. Ebenfalls auf der Rückseite der Trägerplatte werden Flüssigkristallanzeigen installiert. Die Flüssigkristallanzeigen (5) werden über einen Träger (8) mit der integrierter Leuchtscheibe für Anzeigenbeleuchtung (9) mechanisch gehaltert. Die elektrische Kontaktierung der rückseitig montierten Komponenten (3), (4) und (5) zu den auf der Trägerplatte aufgebrachten Leiterbild (6) erfolgt über Leitkleben oder Reflowlöten. Die Flüssigkristallanzeige (5) wird alternativ über elektrische Verbinder und Leitgummi (7) kontaktiert.
Ihre mechanische Fixierung erhalten die Beleuchtungselemente ebenfalls durch das Leitkleben oder Reflowlöten.

Auf der Rückseite der Trägerplatte (1) befinden sich Erhöhungen (1.1) die, ebenfalls mit dem Leiterbild (6) versehen, die elektrischen Kontakte zum Elektronikmodul (10) über z. B. Leitkleben oder Stempellöten herstellen.

Das Elektronikmodul (10) umfaßt Schaltungsträger (10.2) z. B. eine Leiterplatte, elektrische Bauelemente (10.1) und eine Schnittstelle, i. A. ein Stecker (10.3). Dieser Stecker (10.3) kann sich auch alternativ auf der Trägerplatte (1) befinden. Für die hochintegrierten elektronischen Bauelemente (10.1), die eine entsprechende Verlustleistung aufweisen, kann eine Kühlplatte (12) als Wärmesenke bereitgestellt werden. Die Wärmeleitung erfolgt analog dem Prinzip der thermisch optimierten Baugruppen in speziellen Gehäusen, wobei die Bauelemente flächig mit der Kühlplatte des Gehäuses in Kontakt gebracht werden.

Auf der Trägerplatte (1) befindet sich das Zifferblatt (13). Der Zeiger (14) wird auf die Achse des Zeigerantriebs (4.1) aufgepresst. Der Frontrahmen (15) mit integrierter Deckscheibe (16) wird an der Trägerplatte (1) aufgenommen und mechanisch gehalten. Mit der Befestigung des Frontrahmens und der Trägerplatte ist die gesamte "optomechanische" Baugruppe fertiggestellt. Jetzt kann der Elektronikmodul mit der in Verbindung gebracht werden. Das Elektronikmodul (10) wird über Schrauben (11) an den Erhöhungen (1.1) der Trägerplatte (1) befestigt.

### Weitere Ausführungsform

Alternativ zu einer direkten räumlichen Verbindung zur Trägerplatte ist es möglich, das Elektronikmodul (10) in der Zentralelektronik des Fahrzeugs unterzubringen, also keinen direkten Schraubkontakt zwischen Elektronikmodul und Trägerplatte vorzusehen. Die elektrische Verbindung erfolgt dann über Stecker und Kabel.

## Patentansprüche

1. Kombiinstrument für die Anzeige von unterschiedlichen Messdaten in einem Kraftfahrzeug, bestückt mit analogen und/oder digitalen Anzeigeinstrumenten, **dadurch gekennzeichnet, dass** mechanische und optische Bauteile der Anzeigeinstrumente auf einer Trägerplatte (1) montiert sind, dass die elektronische Ansteuerung der Instrumente von einem Elektronikmodul (10) aus erfolgt, dass das Elektronikmodul (10) getrennt von der Trägerplatte untergebracht ist und dass elektrische Kontakte und Verbindungen (6, 7) zur elektrischen Kontaktierung der mechanischen und optischen Bauteile der Anzeigeinstrumente und zur Kontaktierung des Elektronikmoduls (10) auf der Trägerplatte angeordnet sind.

2. Kombiinstrument nach Anspruch 1, **dadurch gekennzeichnet, dass** auf der Trägerplatte (1) ein Leiterbild (6) aufgebracht ist.

3. Kombiinstrument nach einem der vorherigen Ansprüche, **dadurch gekennzeichnet, dass** auf der Trägerplatte (1) ein Zifferblatt (13) angeordnet ist.

4. Kombiinstrument nach einem der vorherigen Ansprüche, **dadurch gekennzeichnet, dass** auf der Rückseite der Trägerplatte (1) Beleuchtungskörper (3), Zeigerantriebe (4) für Analoganzeigeninstrumente und Flüssigkristallanzeigen (5) angeordnet sind.

5. Kombiinstrument nach Anspruch 4, **dadurch gekennzeichnet, dass** die Flüssigkristallzelle (5) über einen Träger (8) mit einer integrierten Leuchtscheibe (9) zur Beleuchtung der Flüssigkristallanzeige (5) mechanisch an der Trägerplatte (1) gehaltert ist.

6. Kombiinstrument nach einem der vorherigen Ansprüche, **dadurch gekennzeichnet, dass** die Trägerplatte Aussparungen für die Aufnahme von Leuchtscheiben für Tubenanzeigen (2.1) und für Warn- und Symbolfelder (2.2) aufweist.

7. Kombiinstrument nach einem der vorherigen Ansprüche, **dadurch gekennzeichnet, dass** das Elektronikmodul (10) in einem speziellen, wärmeableitenden Gehäuse sitzt.

8. Kombiinstrument nach Anspruch 7, **dadurch gekennzeichnet, dass** eine Kühlplatte (12) als eine Wärmesenke derart vorgesehen ist, dass die elektrischen Bauelemente (10.1) des Elektronikmoduls (10) flächig mit der Kühlplatte (12) des Gehäuses in Kontakt gebracht werden.

9. Kombiinstrument nach einem der vorherigen Ansprüche, **dadurch gekennzeichnet, dass** an der Trägerplatte (1) ein Frontrahmen (15) des Kombiinstruments mit einer integrierten Deckscheibe (16) aufgenommen und mechanisch gehalten ist.

10. Kombiinstrument nach einem der vorherigen Ansprüche, **dadurch gekennzeichnet, dass** die elektrische Verbindung von dem Elektronikmodul zu der Trägerplatte über einen Stecker und ein Kabel erfolgt.

11. Verfahren zur Herstellung eines Kombiinstrument für die Anzeige von unterschiedlichen Messdaten in einem Kraftfahrzeug, bestückt mit analogen und/oder digitalen Anzeigeinstrumenten, **dadurch gekennzeichnet, dass** mechanische und optische Bauteile der Anzeigeinstrumente auf einer Trägerplatte (1) vormontiert werden, dass die elektronische Ansteuerung der Instrumente von einem Elektronikmodul (10) aus erfolgt, dass das Elektronikmodul (10) getrennt von derTrägerplatte (1) untergebracht wird und dass elektrische Kontakte und Verbindungen (6,7) zur elektrischen Kontaktierung der mechanischen und optischen Bauteile der Anzeigeinstrumente und zur Kontaktierung des Elektronikmoduls (10) auf der Trägerplatte angeordnet werden.

12. Verfahren zur Herstellung eines Kombiinstruments nach Anspruch 11, **dadurch gekennzeichnet, dass** an der Trägerplatte (1) ein Frontrahmen (15) des Kombiinstruments mit einer integrierten Deckscheibe (16) aufgenommen und mechanisch gehalten wird und dass die mechanischen Bauteile für die Instrumente (4, 8), Leuchtmittel (3), Zeiger (14) sowie elektrische Kontakte und Verbindungen (6, 7) auf der Trägerplatte (1) vormontiert und mit dem Frontrahmen (15) mit der integrierten Deckscheibe (16) versehen als fertiges Modul in den Montageprozess eingebracht werden.

13. Verfahren nach einem der Ansprüche 11 oder 12, **dadurch gekennzeichnet, dass** das Elektronikmodul als vormontiertes Modul in die Endmontage eingebracht wird.

14. Verfahren nach einem der Ansprüche 11-13, **dadurch gekennzeichnet, dass** die elektrische Verbindung von dem Elektronikmodul zu der Trägerplatte in der Endmontage erfolgt.

15. Vefahren nach einem der Ansprüche 11-14, **dadurch gekennzeichnet, dass** die elektrische Verbindung von dem Elektronikmodul zu der Trägerplatte über einen Stecker und ein Kabel hergestellt wird.

## Claims

1. Multi-purpose instrument for displaying different measurement data in a motor vehicle, equipped with analogue and/or digital display instruments, **characterized in that** mechanical and optical components of the display instruments are mounted on a mounting plate (1), **in that** the electronic actuation of the instruments is carried out from an electronic module (10), **in that** the electronic module (10) is accommodated separately from the mounting plate, and **in that** electric contacts and connections (6, 7) for making electrical contact with the mechanical and optical components of the display instruments and for making contact with the electronic module (10) are arranged on the mounting plate.

2. Multi-purpose instrument according to Claim 1, **characterized in that** a conductive pattern (6) is applied to the mounting plate (1).

3. Multi-purpose instrument according to one of the preceding claims, **characterized in that** a dial (13) is arranged on the mounting plate (1).

4. Multi-purpose instrument according to one of the preceding claims, **characterized in that** lighting elements (3), pointer drives (4) for analogue display instruments and liquid crystal displays (5) are arranged on the rear of the mounting plate (1).

5. Multi-purpose instrument according to Claim 4, **characterized in that** the liquid crystal cell (5) is mechanically secured to the mounting plate (1) via a mount (8) with an integrated luminous disc (9) for illuminating the liquid crystal display (5).

6. Multi-purpose instrument according to one of the preceding claims, **characterized in that** the mounting plate has recesses for holding luminous discs for tube displays (2.1) and for warning and symbol fields (2.2).

7. Multi-purpose instrument according to one of the preceding claims, **characterized in that** the electronic module (10) is seated in a special, heat-dissipating housing.

8. Multi-purpose instrument according to Claim 7, **characterized in that** a cooling plate (12) is provided as a heat sink in such a way that the electrical components (10.1) of the electronic module (10) are brought into contact with the cooling plate (12) of the housing through surface contact.

9. Multi-purpose instrument according to one of the preceding claims, **characterized in that** a front frame (15) of the multi-purpose instrument with an integrated cover plate (16) is held on and mechanically secured to the mounting plate (1).

10. Multi-purpose instrument according to one of the preceding claims, **characterized in that** the electrical connection from the electronic module to the mounting plate is made via a plug and a cable.

11. Method for manufacturing a multi-purpose instrument for displaying different measurement data in a motor vehicle, equipped with analogue and/or digital display instruments, **characterized in that** mechanical and optical components of the display instruments are premounted on a mounting plate (1), **in that** the electronic actuation of the instruments is carried out from an electronic module (10), **in that** the electronic module (10) is accommodated separately from the mounting plate (1) and **in that** electrical contacts and connections (6, 7) for making electrical contact with the mechanical and optical components of the display instruments and for making contact with the electronic module (10) are arranged on the mounting plate.

12. Method for manufacturing a multi-purpose instrument according to Claim 11, **characterized in that** a front frame (15) of the multi-purpose instrument with an integrated cover plate (16) is held on and mechanically secured to the mounting plate (1) and **in that** the mechanical components for the instruments (4, 8), illuminating means (3), pointers (14) and electrical contacts and connections (6, 7) are premounted on the mounting plate (1) and are introduced into the mounting process provided with the front frame (15) with the integrated cover plate (16) as a finished module.

13. Method according to one of Claims 11 or 12, **characterized in that** the electronic module is introduced into the final mounting operation as a premounted module.

14. Method according to one of Claims 11 to 13, **characterized in that** the electrical connection from the electronic module to the mounting plate takes place in the final mounting operation.

15. Method according to one of Claims 11 to 14, **characterized in that** the electrical connection from the electronic module to the mounting plate is made via a plug and a cable.

## Revendications

1. Instrument combiné pour indiquer différentes données mesurées dans un véhicule, équipé d'instruments indicateurs analogiques et/ou numériques,
**caractérisé en ce que**
- des composants mécaniques et optiques des instruments indicateurs sont montés sur une plaque porteuse (1),
- la commande électronique des instruments est assurée par un module électronique (10), qui est monté séparé de la plaque porteuse,
- les contacts électriques et les liaisons (6, 7) pour assurer l'alimentation électrique des composants mécaniques et optiques des instruments indicateurs ainsi que celle du module électronique (10) sont disposés sur la plaque porteuse.

2. Instrument combiné selon la revendication 1,
**caractérisé en ce qu'**
un circuit imprimé (6) est disposé sur la plaque porteuse (1).

3. Instrument combiné selon l'une quelconque des revendications 1 ou 2,
**caractérisé en ce qu'**
un cadra (13) est disposé sur la plaque porteuse (1).

4. Instrument combiné selon l'une quelconque des revendications précédentes,
**caractérisé en ce que**
sur la face arrière de la plaque porteuse (1) sont disposés des corps d'éclairage (3), des entraînements d'aiguille (4) pour des instruments indicateurs analogiques, ainsi que des indicateurs à cristaux liquides (5).

5. Instrument combiné selon la revendication 4
**caractérisé en ce que**
la cellule à cristaux liquides (5) est maintenue mécaniquement sur la plaque porteuse (1) par l'intermédiaire d'un support (8) intégrant un voyant lumineux (9) pour éclairer l'indicateur à cristaux liquides (5).

6. Instrument combiné selon l'une quelconque des revendications précédentes
**caractérisé en ce que**
la plaque porteuse présente des évidements pour accueillir des voyants lumineux pour des indicateurs à tubes (2.1) et pour des plages de témoins et de symboles (2.2).

7. Instrument combiné selon l'une quelconque des revendications précédentes
**caractérisé en ce que**
le module électronique (10) est monté dans un boîtier spécifique, conducteur de la chaleur.

8. Instrument combiné selon la revendication 7,
**caractérisé en ce qu'**
il est prévu une plaque de refroidissement (12) en tant qu'élément dissipateur de chaleur, les composants électriques (10.1) du module électronique (10) étant en contact plat avec la plaque de refroidissement (12) du boîtier.

9. Instrument combiné selon l'une quelconque des revendications précédentes,
**caractérisé en ce que**
sur la plaque porteuse (1) est monté et fixé mécaniquement un cadre frontal (15) de l'instrument combiné, intégrant une vitre de couverture (16).

10. Instrument combiné selon l'une quelconque des revendications précédentes,
**caractérisé en ce que**
la liaison électrique entre le module électronique et la plaque porteuse est assurée par un connecteur à fiches et un câble.

11. Procédé de fabrication d'un instrument combiné pour indiquer différentes données mesurées dans un véhicule, équipé d'instruments indicateurs analogiques et/ou numériques,
**caractérisé en ce que**
- des composants mécaniques et optiques des instruments indicateurs sont préassemblés sur une plaque porteuse (1),
- la commande électronique des instruments est assurée par un module électronique (10), qui est monté séparé de la plaque porteuse (1),
- les contacts électriques et les liaisons (6, 7) pour assurer l'alimentation électrique des composants mécaniques et optiques des instruments indicateurs ainsi que celle du module électronique (10) sont disposés sur la plaque porteuse (1).

12. Procédé de fabrication d'un instrument combiné selon la revendication 11,
**caractérisé en ce que**
sur la plaque porteuse (1) est monté et fixé mécaniquement un cadre frontal (15) de l'instrument combiné, intégrant une vitre de couverture (16) et les composants mécaniques des instruments (4, 8), les moyens d'éclairage (3), les aiguilles (14) ainsi que les contacts et liaisons électriques (6, 7) sont préassemblés sur la plaque porteuse et avec le cadre frontal (15) intégrant la vitre de couverture (16), introduits dans le processus de montage en tant que module complet.

13. Procédé selon l'une quelconque des revendications 11 ou 12,
**caractérisé en ce que**
le module électronique (10) est introduit en tant que module préassemblé dans le montage final.

14. Procédé selon l'une quelconque des revendications 11 à 13,
**caractérisé en ce que**
la liaison électrique entre le module électronique (10) et la plaque porteuse a lieu lors du montage final.

15. Procédé selon l'une quelconque des revendications 11 à 14,
**caractérisé en ce que**
la liaison électrique entre le module électronique (10) et la plaque porteuse (1) est réalisée par un connecteur à fiches et un câble.
